# EUROPÄISCHE PATENTSCHRIFT

(11) **EP 1 950 026 B1**
(45) Veröffentlichungstag und Bekanntmachung des Hinweises auf die Patenterteilung: **06.07.2011**
(21) Anmeldenummer: 08000538.2
(22) Anmeldetag: 14.01.2008
(51) Int. Cl.: B29C 45/83, B29C 45/66

(54) **Kniehebelmechanismus für eine Schliesseinheit einer Spritzgiessmaschine**
Toggle mechanism for a locking unit of an injection moulding machine
Mécanisme à genouillère pour une unité de fermeture d'une machine de moulage par injection

(30) Priorität: 25.01.2007 AT 1222007
(43) Veröffentlichungstag der Anmeldung: 30.07.2008
(73) Patentinhaber: ENGEL AUSTRIA GmbH, 4311 Schwertberg (AT)
(72) Erfinder: Kappelmüller, Werner, 4311 Schwertberg (AT)
(74) Vertreter: Hofinger, Stephan

(56) Entgegenhaltungen:
- JP-A- 58 184 320
- JP-A- 2000 158 501
- RU-C1- 2 198 227
- US-A- 3 513 506
- US-A- 4 773 845
- US-A- 5 290 617

## Beschreibung

Die Erfindung betrifft einen Gelenksmechanismus, insbesondere Kniehebelmechanismus, für eine Schließeinheit einer Spritzgießmaschine mit einem Gelenkskopf und einem im Gelenkskopf drehbar gelagerten Gleitelement, vorzugsweise Bolzen, wobei der Gelenkskopf und das Gleitelement im Lagerbereich jeweils eine Gleitfläche aufweisen. Außerdem betrifft die Erfindung eine Schließeinheit für eine Spritzgießmaschine mit einem solchen Gelenksmechanismus.

Die Schließeinheit einer Spritzgießmaschine dient dazu, das Spritzwerkzeug aufzunehmen und sie führt die zum Schließen, Zuhalten und Öffnen notwendigen Bewegungen durch. Zum Öffnen und Schließen des Spritzwerkzeuges werden häufig Hebelmechanismen verwendet, beispielsweise Kniehebelmechanismen, durch die eine Rotationsbewegung in eine Linearbewegung umgesetzt wird. Spritzgießmaschinen werden aufgrund der enormen Kräfte, die in der Schließeinheit auftreten, nach ihrer Schließkraft eingeteilt, wobei der Stand der Technik Schließkräfte von einigen 100 kN bis etwa 100 000 kN umfasst. Da diese Kräfte über Hebelmechanismen übertragen werden, treten an den Gelenken besondere Beanspruchungen auf und es ist daher erforderlich, Maßnahmen zu treffen, um die Gelenke zu schützen und dennoch ein geringes Lagerspiel bei optimaler Gleitung zu gewährleisten. Beim Stand der Technik werden daher zwischen Gelenkskopf und darin drehbar gelagertem Bolzen Büchsen eingesetzt, die als Reibvermittler dient.

Nachteilig am Stand der Technik ist der Umstand, dass die Reibbüchsen nur schwer exakt im Gelenk platzierbar sind, sodass nur ein geringes Spiel auftritt, und dabei eine optimale Drehbewegung im Gelenk erhalten bleibt.

Das Dokument US-A-5290617 offenbart einen Gelenksmechanismus gemäß dem Oberbegriff des Anspruchs 1.

Aufgabe der vorliegenden Erfindung ist es daher, die oben beschriebenen Nachteile zu vermindern.

Diese Aufgabe wird durch die Merkmale des Anspruchs 1 gelöst. Indem bei einem gattungsgemäßen Gelenksmechanismus eine Gleitfläche zumindest abschnittsweise einen Gusswerkstoff umfasst, kann vollständig auf das Einbringen einer Büchse in das Gelenk verzichtet werden. Die Gleitfläche, die einen Gusswerkstoff umfasst, dient selbst als Reibpartner bzw. als Lagerwerkstoff. Das Einsparen der Büchse bringt nicht nur einen Fertigungsvorteil und somit eine Vereinfachung des Gelenksbaus durch eine verringerte Anzahl an Teilen sondern auch Vorteile bei der Einpassung des Gelenkes.

Die Gleitfläche des Gelenkskopfes umfasst einen Gusswerkstoff , wobei vorgesehen ist, dass der Gusswerkstoff Gusseisen umfasst.

Gusswerkstoffe, insbesondere Gusseisen, haben dabei den Vorteil, dass diese Materialien gute Gleiteigenschaften bei geringem Verschleiß aufweisen. Durch diese Ausgestaltung erfolgt eine Selbstschmierung des Lagers. Das Gusseisen umfasst Graphiteinlagerungen. Derartige Materialien sind einerseits besonders hart und haben andererseits optimale Gleiteigenschaften.

In einer bevorzugten Ausführungsvariante ist vorgesehen, dass die Graphiteinlagerungen kugelförmig sind, wenngleich auch lamellenförmige Graphiteinlagerungen bekannt sind und erfindungsgemäß Einsatz finden können.

Um das Gelenk besonders verschleißarm zu halten, umfasst eine Gleitfläche eines Gleitpartners ein Gusseisen mit Graphiteinlagerungen. Der andere Gleitpartner bzw. die Gleitfläche ist entsprechend gehärtet, beispielsweise durch einsatzgehärteten Stahl und/oder nitrierten Stahl.

Besonders günstig hat sich der Einsatz des beschriebenen Gelenksmechanismus als Teil eines Kniehebelmechanismus herausgestellt.

Weitere Details und Vorteile der Erfindung werden anhand der folgenden Figuren und Figurenbeschreibungen erläutert. Es zeigt schematisch:
- Fig. 1: eine Schließeinheit einer Spritzgießmaschine in Seitenansicht in einer ersten Bewegungsstellung,
- Fig. 2: die Schließeinheit von Fig. 1 in einer zweiten Bewegungsstellung,
- Fig. 3: die Gelenksmechanismen einer Schließeinheit in Draufsicht,
- Fig. 4: eine Seitenansicht (A) eines Gelenkskopfes sowie einen Schnitt (B) längs H-H' der Darstellung von (A) und
- Fig. 5: einen Bolzen in Seitenansicht (A) und Draufsicht (B).

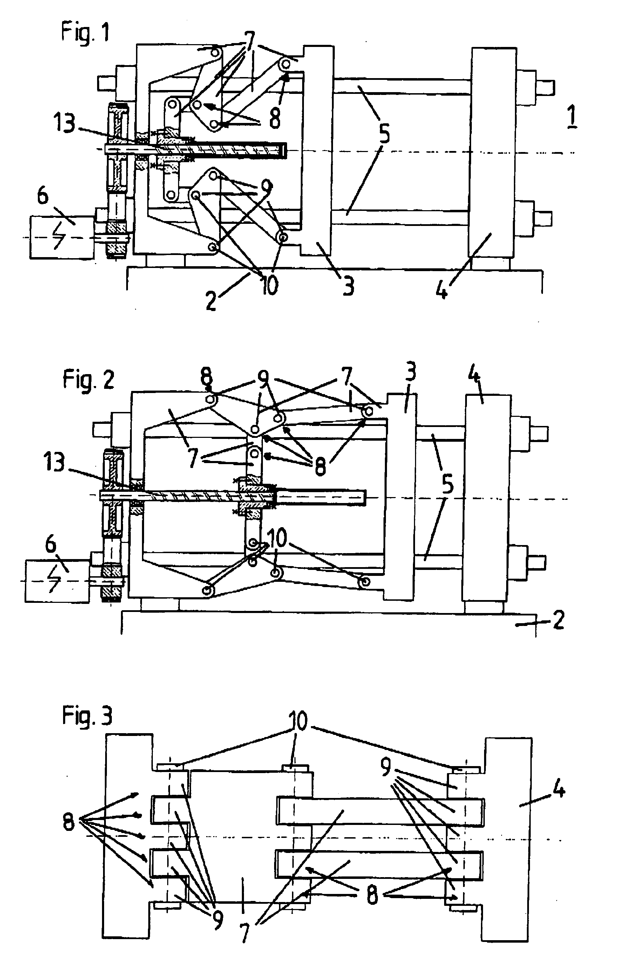

Die in Fig. 1 dargestellte Schließeinheit 1 einer Spritzgießmaschine ist auf einem schematisch angedeuteten Rahmen 2 angeordnet und umfasst eine bewegliche Formaufspannplatte 3, auf die ein Teil des Formwerkzeuges aufspannbar ist, Holme 5, einen Antrieb 6 zum Bewegen der beweglichen Formaufspannplatte 3 in Richtung der feststehenden Formaufspannplatte 4 sowie Hebelmechanismen 7 bzw. Gelenksmechanismen 8, die die Rotationsbewegung des Antriebes 6 in eine Linearbewegung der beweglichen Formaufspannplatte 3 übersetzen. Die Funktionsweise derartiger Schließeinheiten 1 wie hier gezeigt mit Kniehebelmechanismus braucht an dieser Stelle nicht genauer ausgeführt werden, da sie hinlänglich aus dem Stand der Technik bekannt ist. Es sei hier exemplarisch auf die AT 412 855 B verwiesen, in der ein solcher Mechanismus beschrieben wird. Aus Gründen der Übersichtlichkeit wurde in der Darstellung darauf verzichtet, ein Formwerkzeug, aufgespannt auf die Formaufspannplatten 3, 4, abzubilden

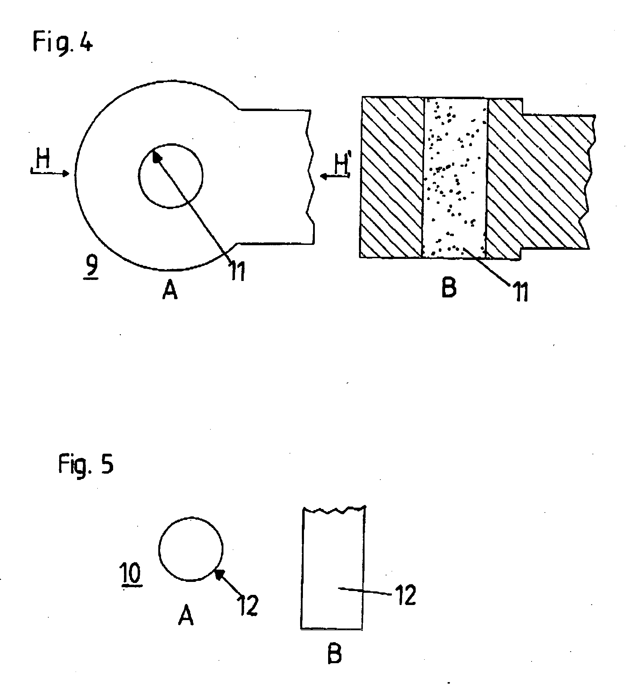

In den Fig. 1 bis 3 sind die eigentlichen Hebelmechanismen genauer erkennbar, wo in Gelenksköpfen 9 ein Bolzen 10 verläuft, wobei der Gelenkskopf 9 eine etwa zylinderförmige Bohrung aufweist, deren Oberfläche die Gleitfläche 11 bildet (siehe auch Fig. 4 und 5). Der Bolzen 10 ist ebenfalls etwa zylinderförmig ausgebildet und gleitet mit seiner Oberfläche (= Gleitfläche 12 des Bolzens 10) in der Gleitfläche 11 des Gelenkskopfes 9. In den gezeigten Ausführungsbeispielen ist der Gelenkskopf 9 (manchmal auch als Lasche bezeichnet) im Bereich der Gleitfläche 11 vollständig aus Gusseisen mit kugelförmigen Graphiteinlagerungen gefertigt. Der Bolzen 10 ist ein im Bereich der Gleitfläche 12 einsatzgehärterer Stahl. In der Fig. 1 ist die geöffnete Position der Schließeinheit 1 ersichtlich (der Übersichtlichkeit halber wurde darauf verzichtet, ein Spritzwerkzeug zu zeigen). Die Hebelmechanismen 7 sind sozusagen im entspannten Zustand. Die Fig. 2 zeigt die geschlossene Position der Schließeinheit 1 (ebenfalls ohne Spritzwerkzeug). Im Betrieb wird das Spritzwerkzeug in dieser Position mit den oben beschriebenen Kräften (bis zu 100 000 kN) zugehalten. Dabei treten enorme Kräfte auf, die über die einzelnen Streben der Hebelmechanismen 7 an die Gelenksmechanismen 8 über die Lasche oder den Gelenkskopf 9 auf den Bolzen 10 übertragen werden. Eine gute Schmierung eines solchen Lagers ist eine der Voraussetzungen für ein klagloses Funktionieren der Schließeinheit 1 über mehrere 100 000 Zyklen. Eine Spindel 13 und die Hebelmechanismen 7 setzen die Rotationsbewegung des Antriebs 6 in eine Linearbewegung um. Zumindest der Bereich der Oberfläche bzw. der Gleitfläche 11 des Gelenkskopfes 9 ist aus Gusseisen mit Graphiteinlagerungen gefertigt, während die Bolzen 10 einsatzgehärteten oder nitrierten Stahl zumindest im Bereich der Gleitfläche 12 aufweisen.

Zur besseren Verdeutlichung ist in Fig. 2 ein Kniehebelmechanismus einer Schließeinheit in Draufsicht dargestellt. Die Gelenksmechanismen 8, Gelenksköpfe 9 und die Bolzen 10 sind dabei deutlicher erkennbar.

In Fig. 4 ist ein Ausführungsbeispiel eines Gelenkskopfes 9 in Seitenansicht (A) und im Querschnitt (B) gezeigt. Die Gleitfläche 11 hat die Form der Innenfläche eines Zylindermantels und ist zumindest an der Oberfläche im Lagerbereich aus Gusseisen mit kugelförmigem Graphit gefertigt. Der Bolzen 10 der Fig. 5 ist entsprechend der Form des Gelenkskopfes 9 gefertigt (hier als Zylinder) und an der Gleitfläche 12 (= Oberfläche im Lagerbereich) aus gehärtetem Stahl gefertigt. Eine umgekehrte Paarung (Gelenkskopf 12 aus gehärtetem Stahl und Bolzen 10 aus Gusseisen mit Graphiteinlagerungen ist ebenfalls denkbar.

Die Gleitfläche 11 des Gelenkskopfes 9 ist dabei in direktem Kontakt mit der Gleitfläche 12 des Gleitelementes 10. Dies ist ein Vorteil der Erfindung, da nämlich das Gelenk so ohne Büchse auskommt und die Gleitflächen 11, 12 ohne Vermittler (Büchse) in Kontakt kommen. Gleitelement 10 und Gelenkskopf 9 sind dabei so dimensioniert, dass das Lagerspiel möglichst gering ist.

Typische Durchmesser von Bolzen 10 bzw. Außendurchmesser von Büchsen beim Stand der Technik betragen je nach Maschinengröße und -typ im untersuchten Fall zwischen 40 mm und 180 mm. Dabei treten im Bereich des Bolzens 10 Flächendrücke von etwa 80 bis 150 N/mm² auf, während im Bereich der Büchse diese Drücke etwas geringer bei etwa 70 bis 130 N/mm² liegen. Unter die oben genannten Gusswerkstoffe fallen beispielsweise der Stahlguss, bei dem Eisen/Kohlenstofflegierungen mit einem Kohlenstoffgehalt bis rund 2 % vergossen werden. Als weiterer Werkstoff wäre Gusseisen vorgesehen, worunter man Eisenl Kohlenstofflegierungen mit mehr als 2 % Kohlenstoff, aber nicht mehr als 4,5 % Kohlenstoff versteht. Gusseisen mit Lamellengraphit zieht ein Gusseisen vor, bei dem der Graphit weitestgehend lamellar angeordnet ist. Infolge der verringerten mechanischen Festigkeit beteiligen sich die Graphitlamellen nicht an der Kraftübertragung, sondern wirken wie Hohlräume, die den tragenden Querschnitt vermindern und an ihren Rändern Spannungskonzentrationen infolge Kerbwirkung hervorrufen. Bei Gusseisen mit Kugelgraphit ist der Graphit in kugeliger bzw. sphärolitischer Form angeführt. Gegenüber dem Gusseisen mit Lamellengraphit ist die Festigkeit deutlich erhöht. Die kugelige Ausbildung des Graphits wird durch Zusatz von geringen Mengen an Magnesium bis zu 0,5 % in Kombination mit Cer und Calcium erreicht. Andere Formen von Gusswerkstoff umfassen beispielsweise Temperguss, Hartguss, Sondergusseisen wie austenitisches Gusseisen, Siliziumsonderguss, Aluminiumsonderguss und Chromsonderguss. Hierbei sei auf die entsprechenden Werkstoffkundebücher verwiesen. Gusseisen mit Kugelgraphit ist darüber hinaus in entsprechenden DIN-Normen definiert (DIN EN 1563, DIN EN 1564 etc.). Andere Bezeichnungen für Gusseisen mit kugelförmigen Graphiteinlagerungen, abgekürzt häufig mit GGG, sind Kugelgraphitguss, duktiles Gusseisen, sphärolitisches Gusseisen, Sphäroguss (als Markenname) und im angelsächsischen tactile cast iron (nodular cast iron) oder SG (spheroidal graphit) cast iron.

## Patentansprüche

1. Kniehebelmechanismus für die Schließeinheit (1) einer Spritzgießmaschine umfassend einen Gelenksmechanismus (8) mit einem Gelenkskopf (9) und einem im Gelenkskopf (9) drehbar gelagerten Gleitelement (10), vorzugsweise Bolzen, wobei der Gelenkskopf (9) und das Gleitelement (10) im Lagerbereich jeweils eine Gleitfläche (11, 12) aufweisen, **dadurch gekennzeichnet, dass** eine Gleitfläche (11, 12) zumindest abschnittsweise einen Gusswerkstoff umfasst, der Gusseisen mit Graphiteinlagerungen umfasst und dass eine Gleitfläche (11, 12) gehärteten Stahl umfasst, wobei die Gleitfläche (11) des Gelenkskopfes (9) in direktem Kontakt mit der Gleitfläche (12) des Gleitelements (10) ist.

2. Kniehebelmechanismus nach Anspruch 1, **dadurch gekennzeichnet, dass** der gehärtete Stahl ein einsatzgehärteter oder nitrierter Stahl ist.

3. Kniehebelmechanismus nach Anspruch 1 oder 2, **dadurch gekennzeichnet, dass** die Gleitfläche (11) des Gelenkskopfes (9) den Gusswerkstoff umfasst.

4. Kniehebelmechanismus nach einem der Ansprüche 1 bis 3, **dadurch gekennzeichnet, dass** die Graphiteinlagerungen im Wesentlichen kugelförmig sind.

5. Schließeinheit für eine Spritzgießmaschine mit einem Kniehebelmechanismus nach einem der Ansprüche 1 bis 4.

## Claims

1. A toggle mechanism for the closing unit (1) of an injection moulding machine including a link mechanism (8) having a link head (9) and a sliding element (10), preferably a pin, mounted rotatably in the link head (9), wherein the link head (9) and the sliding element (10) have a respective sliding surface (11, 12) in the mounting region, **characterised in that** a sliding surface (11, 12) at least portion-wise includes a cast material which includes cast iron with graphite inclusions and a sliding surface (11, 12) includes hardened steel, wherein the sliding surface (11) of the link head (9) is in direct contact with the sliding surface (12) of the sliding element (10).

2. A toggle mechanism according to claim 1 **characterised in that** the hardened steel is a case-hardened or nitrided steel.

3. A toggle mechanism according to claim 1 or claim 2 **characterised in that** the sliding surface (11) of the link head (9) includes the cast material.

4. A toggle mechanism according to one of claims 1 to 3 **characterised in that** the graphite inclusions are substantially spherical.

5. A closing unit for an injection moulding machine having a toggle mechanism according to one of claims 1 to 4.

## Revendications

1. Mécanisme à genouillère pour l'unité de fermeture (1) d'une machine de moulage par injection comprenant un mécanisme articulé (8) avec une tête articulée (9) et un élément glissant (10) logé de manière à pouvoir tourner dans la tête articulée (9), de préférence un boulon, la tête articulée (9) et l'élément glissant (10) présentant chacun une surface de glissement (11, 12) dans la zone de palier, **caractérisé en ce qu'**une surface de glissement (11, 12) comporte au moins par endroits un matériau de moulage présentant de la fonte de fer avec des inclusions de graphite et **en ce qu'**une surface de glissement (11, 12) comporte de l'acier trempé, la surface de glissement (11) de la tête articulée (9) étant en contact direct avec la surface de glissement (12) de l'élément glissant (10).

2. Mécanisme à genouillère selon la revendication 1, **caractérisé en ce que** l'acier trempé est un acier cémenté ou nitruré.

3. Mécanisme à genouillère selon la revendication 1 ou 2, **caractérisé en ce que** la surface de glissement (11) de la tête articulée (9) comporte le matériau de moulage.

4. Mécanisme à genouillère selon l'une quelconque des revendications 1 à 3, **caractérisé en ce que** les inclusions de graphite présentent une forme sensiblement sphérique.

5. Unité de fermeture pour une machine de moulage par injection dotée d'un mécanisme à genouillère selon l'une quelconque des revendications 1 à 4.
